(19) Europäisches Patentamt
European Patent Office
Office européen des brevets

(11) **EP 2 225 588 B1**

(12) **FASCICULE DE BREVET EUROPEEN**

(45) Date de publication et mention
de la délivrance du brevet:
**27.04.2011 Bulletin 2011/17**

(21) Numéro de dépôt: **08865975.0**

(22) Date de dépôt: **22.12.2008**

(51) Int Cl.:
*G01T 1/185* *(2006.01)*      *G01T 3/00* *(2006.01)*

(86) Numéro de dépôt international:
**PCT/EP2008/068172**

(87) Numéro de publication internationale:
**WO 2009/083536 (09.07.2009 Gazette 2009/28)**

(54) **PROCEDE DE TRAITEMENT DE SIGNAUX DE MESURE DE CHAMBRES A FISSION**

VERFAHREN ZUR VERARBEITUNG VON SPALTKAMMERMESSSIGNALEN

METHOD OF PROCESSING FISSION CHAMBER MEASUREMENT SIGNALS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.12.2007 FR 0760331**

(43) Date de publication de la demande:
**08.09.2010 Bulletin 2010/36**

(73) Titulaire: **Commissariat à l'Énergie Atomique et aux Énergies Alternatives 75015 Paris (FR)**

(72) Inventeurs:
• **HUDELOT, Jean-Pascal F-04800 Greoux Les Bains (FR)**
• **GIRARD, Jean-Michel F-13100 Aix En Provence (FR)**

(74) Mandataire: **Ilgart, Jean-Christophe BREVALEX 95 rue d'Amsterdam 75378 Paris Cedex 8 (FR)**

(56) Documents cités:
• **DATABASE INSPEC [Online] THE INSTITUTION OF ELECTRICAL ENGINEERS, STEVENAGE, GB; 24 janvier 1983 (1983-01-24), MOORE M S ET AL: "Neutron-induced fission cross section of <244>Pu" XP002504181 Database accession no. 2009247 & Nuclear Physics A Netherlands, vol. A393, no. 1-2, 24 janvier 1983 (1983-01-24), pages 1-14, ISSN: 0375-9474**

## Description

Domaine technique et art antérieur

La présente invention se rapporte au domaine des techniques de mesures non destructives.

Plus précisément, l'invention concerne un procédé de traitement de signaux de mesure délivrés par une chambre à fission et obtenus par interrogation neutronique active.

Le procédé de traitement de l'invention est particulièrement bien adapté au traitement de signaux bruts délivrés par un dispositif d'étalonnage de chambre à fission tel que le dispositif faisant l'objet d'une demande de brevet déposée, ce même jour, par la Demanderesse, et intitulé « Dispositif de mesure de taux de comptage et dispositif d'étalonnage de chambre à fission associé », lesquels dispositifs seront rappelés dans la présente demande.

Les chambres à fission sont utilisées pour détecter des neutrons. Une chambre à fission contient de la matière fissile et un gaz susceptible de s'ioniser. Sous l'action des neutrons, la matière fissile émet des particules qui ionisent le gaz. La quantité de gaz ionisé traduit la quantité de neutrons reçus dans la chambre à fission. Seule une partie de la matière fissile, appelée masse efficace (« effective mass » en langue anglaise), participe à l'émission des particules qui ionisent le gaz. Dans la pratique, la connaissance précise de la masse efficace est nécessaire à la détermination des grandeurs physiques absolues que sont le flux neutronique ou les indices de spectres. La masse efficace d'un matériau fissile est calculée dans l'art antérieur en effectuant le produit entre la masse mesurée du matériau fissile et l'efficacité de la chambre à ionisation utilisée pour détecter les produits de fission du matériau. Un tel calcul de masse efficace peut être par exemple trouvé dans la publication intitulée "Neutron induced fission cross section of Pu-244", Nuclear Physics A 393 (1983).

Le procédé de traitement de l'invention permet de calculer la masse efficace de l'isotope fissile à partir de mesures délivrées par un dispositif d'étalonnage tel que le dispositif mentionné précédemment.

A ce jour, l'étalonnage des chambres à fission est réalisé en réacteur nucléaire, soit en spectre thermique (ou colonne thermique), soit en spectre de fission. De nombreuses méthodes d'étalonnage ont été développées dans ce cadre. Ces méthodes nécessitent toutes l'utilisation et la disponibilité d'un réacteur de recherche. Pour des raisons de sécurité, ces méthodes nécessitent la mise en place de procédures expérimentales lourdes à mettre en oeuvre et sont, en conséquence, coûteuses. Par ailleurs, les réacteurs de recherche disposant de dispositifs d'étalonnage sont de moins en moins nombreux dans le monde, d'où la nécessité qu'il y à effectuer des déplacements si l'on veut étalonner des chambres à fission.

Le procédé de traitement de l'invention permet de déterminer de façon fiable, précise et maîtrisée, les masses efficaces de chambres à fission sans les inconvénients mentionnés ci-dessus.

Exposé de l'invention

En effet, l'invention concerne un procédé de détermination de masses efficaces de N dépôts de matière fissile placés, respectivement, dans N chambres à fission de mesure, N étant un nombre entier supérieur ou égal à 1, ce procédé étant défini dans la revendication 1.

Selon une caractéristique supplémentaire du procédé de l'invention, une matrice variance var[m] de la matrice des masses efficaces [m] est calculée selon les étapes de la revendication 2.

Concrètement, l'invention comporte trois volets :

a) La mise en équation du problème, qui permet d'exprimer par un système matriciel d'équations le taux de comptage enregistré sur les chambres à fission en fonction des masses efficaces, des compositions en isotopes des chambres, et des sections efficaces macroscopiques massiques de fission des isotopes dans le spectre neutronique relatif à la configuration d'étude du dispositif d'étalonnage.

b) Un étalonnage primaire visant à déterminer les sections efficaces macroscopiques massiques des différents isotopes d'intérêt dans une configuration donnée du dispositif d'étalonnage (cette étape nécessite l'utilisation de chambres à fission étalons primaires dont la masse efficace et les compositions isotopiques sont connues avec précision, ces étalons primaires pouvant alors soit provenir de fabrications spécifiques, soit avoir été préalablement étalonnés dans un autre dispositif d'étalonnage (en réacteur par exemple)).

c) Un étalonnage secondaire, qui permet, connaissant les compositions isotopiques et les taux de comptage obtenus dans le dispositif d'étalonnage par interrogation neutronique active, de remonter à la masse efficace d'isotope principal contenu dans les chambres à fission.

Le procédé de traitement de l'invention permet d'obtenir, pour tous les actinides, à l'aide d'un dispositif d'étalonnage en configuration de neutrons rapides, des précisions d'étalonnage équivalentes à celles obtenues en réacteur.

Dans le cas d'un dispositif d'étalonnage en configuration de neutrons thermiques, le procédé de traitement de l'invention permet d'obtenir des précisions équivalentes à celles obtenues en réacteur dans le cas des isotopes fissiles aux neutrons thermiques.

Brève description des figures

D'autres caractéristiques et avantages de l'invention apparaîtront à la lecture d'un mode de réalisation préférentiel fait en référence aux figures jointes, parmi lesquelles :

- la figure 1 représente un schéma de principe de cellule de mesure qui participe à un dispositif de mesure de taux de comptage qui délivre des signaux de mesure aptes à être traités par le procédé de l'invention;
- la figure 2 représente une vue en coupe partielle d'un premier exemple de structure qui participe à un dispositif de mesure de taux de comptage qui délivre des signaux de mesure aptes à être traités par le procédé de l'invention ;
- la figure 3 représente une vue en coupe partielle d'un deuxième exemple de structure qui participe à un dispositif de mesure de taux de comptage qui délivre des signaux de mesure aptes à être traités par le procédé de l'invention;
- la figure 4 représente un schéma de principe de dispositif de taux de comptage de chambre à fission qui délivre des signaux de mesure aptes à être traités par le procédé de l'invention ;
- la figure 5 représente un schéma de principe du procédé de traitement de signaux de mesure de l'invention ;
- la figure 6 représente un schéma de principe de dispositif d'étalonnage de chambre à fission qui met en oeuvre le procédé de traitement de signaux de mesure de l'invention.

Sur toutes les figures, les mêmes références désignent les mêmes éléments.

Description d'un mode de réalisation préférentiel de l'invention

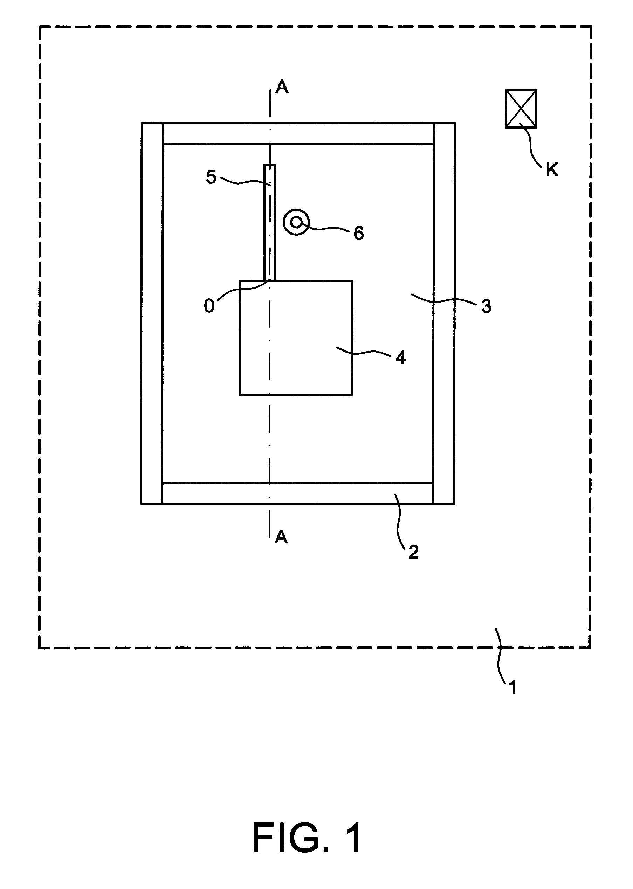

Les figures 1-4 représentent, à titre d'exemple non limitatif, un dispositif de mesure de taux de comptage de chambre à fission qui délivre des mesures de taux de comptage aptes à être traitées par le procédé de l'invention.

La figure 1 représente une cellule de mesure qui participe au dispositif de mesure de taux de comptage. La cellule de mesure 1 est constituée d'une enceinte 2 qui contient un matériau 3 dans lequel est formée une cavité 4 et d'un compteur de neutrons K. Le matériau qui constitue l'enceinte 2 est, par exemple, du polyéthylène et le matériau 3 est, par exemple, du graphite. Une cavité longitudinale 5 apte à recevoir une chambre à fission est formée à l'intérieur du matériau 3. Un générateur de neutrons 6 est placé, dans le matériau 3, à proximité de la cavité 5. La cavité cylindrique 5 débouche sur la cavité 4 par une ouverture O. Dans le mode de réalisation représenté sur la figure 1, le compteur de neutrons K est placé à côté de l'enceinte 2. L'invention concerne également le cas où le compteur de neutrons est situé dans l'enceinte 2.

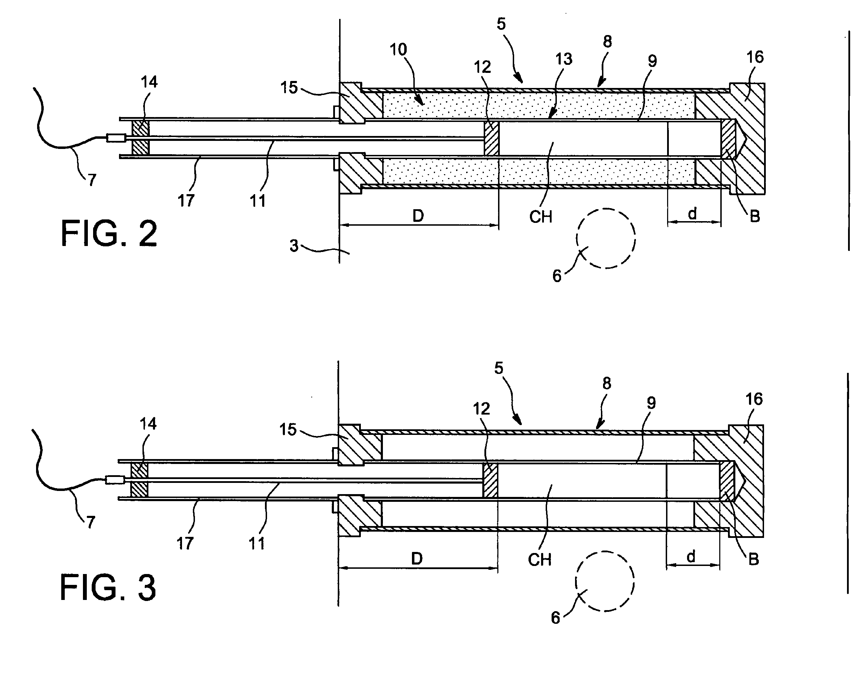

La figure 2 représente une vue en coupe partielle d'un premier exemple de structure qui participe au dispositif de mesure de taux de comptage.

La structure représentée en figure 2 est destinée à l'obtention d'un spectre neutronique rapide. La cavité 5 contient deux enveloppes cylindriques coaxiales 8, 9, l'enveloppe 8 entourant l'enveloppe 9. Les enveloppes 8 et 9 sont, par exemple, en inox et ont une épaisseur de 1mm. Une feuille de matériau 13, par exemple une feuille de cadmium de 1mm d'épaisseur, recouvre la face extérieure du cylindre 9. La feuille de matériau 13 a pour fonction de capturer les neutrons thermiques, c'est-à-dire les neutrons dont l'énergie est inférieure à 0,625eV. Un bloc de matériau 10 est placé dans l'espace qui sépare la feuille de matériau 13 et l'enveloppe 8. Le matériau 10, par exemple du borolène (i.e. du bore et du polyéthylène), a une épaisseur égale, par exemple, à 16mm. Deux bagues de centrage 15 et 16 maintiennent et alignent les enveloppes cylindriques 8 et 9 dans la cavité 5. Une butée B ferme la cavité du côté de la bague de centrage 16. La chambre à fission CH est placée dans l'enveloppe cylindrique 9. Une première extrémité de la chambre à fission est reliée à un élément de connexion 12 qui collecte les électrons créés du fait de l'ionisation du gaz contenu dans la chambre. Cette première extrémité de la chambre à fission est placée à une distance D de l'ouverture O, l'autre extrémité de la chambre étant placée à une distance d de la butée B. L'élément de connexion 12 est relié à un câble coaxial rigide 11. Une enveloppe cylindrique 17, par exemple une enveloppe en inox d'épaisseur 1mm, alignée avec l'enveloppe cylindrique 9 est placée dans la cavité 4. Une bague de centrage 14 maintient le câble coaxial rigide 11 dans l'enveloppe cylindrique 17. Un connecteur relie le câble coaxial rigide 11 à un câble de mesure souple 7 qui transmet le signal vers des circuits de traitement (non représentés sur la figure 2 ; voir figure 3).

Le système de guidage et de positionnement constitué par les éléments 14, 15 et 16 garantit avantageusement une bonne reproductibilité de la position axiale et du centrage radial de la chambre CH. La précision obtenue pour cette position peut être, par exemple, de l'ordre de 1mm, voire moins. Par ailleurs, la chambre à fission CH, l'élément de connexion 12 et le câble coaxial 11 sont aptes à se déplacer longitudinalement dans l'enveloppe cylindrique 9. Le déplacement longitudinal de la chambre à fission permet avantageusement de rechercher une position optimale de la chambre, à savoir la position pour laquelle les résultats de mesure correspondent à un flux maximal.

Les matériaux et dimensions de la structure de l'invention représentée en figure 2 sont préférentiellement obtenus à l'aide du code de calcul neutronique de Monte-Carlo MCNP (MCNP pour « Monte-Carlo N-Particle »). C'est précisément par ce code de calcul que les matériaux et dimensions mentionnés ci-dessus ont été obtenus. Toutefois, d'autres matériaux ayant des caractéristiques équivalentes pourraient également être choisis pour la constitution de cette structure. Le choix de ces autres matériaux impliquerait alors un dimensionnement différent pour l'obtention de performances sensiblement équivalentes. Les matériaux mentionnés ci-dessus permettent toutefois de réaliser un dispositif d'étalonnage ayant des dimensions « acceptables », c'est-à-dire un dispositif ni trop volumineux ni trop encombrant. Le choix de l'inox pour les enveloppes cylindriques 8, 9 et 17 permet d'assurer une excellente rigidité à l'ensemble du dispositif et de garantir sa résistance à l'usure. Le choix du borolène est justifié par la bonne résistance de ce matériau au vieillissement, par son efficacité en terme de capture des neutrons thermiques et par son faible coût.

Le dispositif de centrage 14, 15, 16 de la chambre à fission est spécifique pour chaque diamètre de chambre étudiée. Les bagues de centrage 14, 15, 16 et la butée B sont, par exemple, en inox. Les diamètres des bagues de centrage et l'usinage de la butée B sont adaptés au diamètre du câble coaxial rigide 11.

Dans la structure décrite ci-dessus, seuls les neutrons n'ayant pas subi de ralentissement/thermalisation dans le graphite de la cellule et dans le borolène pénètrent à l'intérieur de la chambre à fission. Ainsi, la chambre à fission ne voit-elle que les neutrons rapides émis par le générateur 6, c'est-à-dire les neutrons qui n'ont pas subi d'interaction.

La figure 3 représente une vue en coupe partielle d'un deuxième exemple de structure qui participe au dispositif de mesure de taux de comptage. La structure de la figure 3 est adaptée à l'obtention d'un spectre neutronique thermique. La cavité 5 comprend tous les éléments constitutifs déjà décrits en référence à la figure 2, à l'exception du bloc de matériau 10 et de la feuille de cadmium 13. L'espace entre les enveloppes 8 et 9 est ici rempli d'air. De même que précédemment, la position de la chambre à fission peut être ajustée longitudinalement à l'aide, par exemple, des moyens de coulissement mentionnés précédemment.

Les neutrons qui sont issus du générateur 6 peuvent ici pénétrer dans la chambre à fission quelles que soit leurs énergies. Toutefois, ces neutrons traversent auparavant une épaisseur de graphite comprise, par exemple, entre 0cm et environ 40cm selon la position occupée par la chambre à fission dans l'enveloppe 9, ce qui permet de discriminer leur énergie en fonction de leur instant d'arrivée au niveau de la chambre à fission, c'est-à-dire en fonction de l'épaisseur de graphite traversée. A titre d'exemple non limitatif, les calculs élaborés à partir du code de Monte-Carlo MCNP4C2 ont montré que plus de 99,9% des neutrons émis par un générateur de neutrons dont la fréquence de tir est de 125Hz sont, après chaque tir, des neutrons thermiques dans une plage de temps comprise entre $700\mu s$ et $3500\mu s$, quelle que soit la position axiale de la chambre dans le dispositif d'étalonnage.

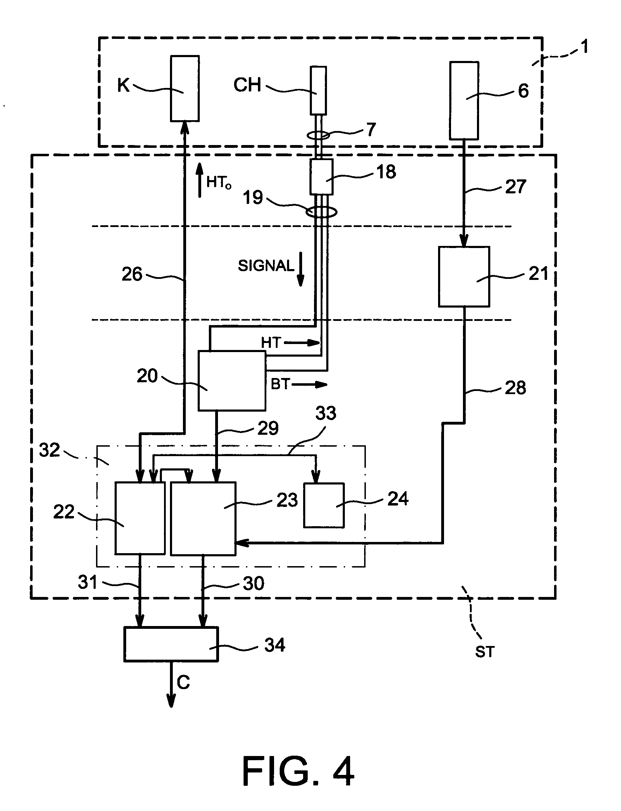

La figure 4 illustre un schéma de principe du dispositif de mesure de taux de comptage de chambre à fission. Le dispositif de mesure comprend :

- une cellule de mesure 1 telle que décrite ci-dessus et dans laquelle sont intégrés une chambre à fission CH, un générateur de neutrons 6 et un compteur de neutrons K,
- un système de traitement ST des signaux délivrés par la chambre à fission CH et par le compteur K et qui délivre, d'une part, un signal représentatif du signal délivré par la chambre à fission et, d'autre part, un signal représentatif du signal délivré par le compteur K, et
- un circuit de calcul 34 qui calcule le taux de comptage C de la chambre à fission normalisé par rapport au signal délivré par le compteur K à partir des signaux délivrés par le système de traitement ST.

Le système de traitement ST comprend :

- un préamplificateur 18 qui amplifie le signal délivré, via le câble de mesure 7, par la chambre à fission CH,
- un amplificateur 20 relié au préamplificateur 18 par un câble multi-conducteurs 19 qui transmet en direction de la chambre à fission CH une haute tension HT et une basse tension BT,
- un circuit électronique 21 relié par un câble 27 au générateur de neutrons 6,
- un circuit d'acquisition 32 qui comprend un amplificateur 22, une carte d'acquisition 23 et un circuit de haute tension 24, l'amplificateur 22 recevant, via un câble 26, le signal délivré par le compteur K et, via une liaison électrique 33, la haute tension délivrée par le circuit 24, le câble 26 alimentant en haute tension $HT_0$ le compteur K, la carte d'acquisition 23 recevant, via une liaison électrique 29, le signal délivré par l'amplificateur 20 et, via une liaison électrique 28, le signal délivré par le circuit électronique 21, l'amplificateur 22 délivrant le signal représentatif du signal délivré par le compteur K et la carte d'acquisition 23 délivrant le signal représentatif du signal délivré par la chambre à fission.

A titre d'exemple non limitatif, le dispositif de mesure de taux de comptage représenté en figure 4 ne contient qu'une seule chambre à fission. De façon plus générale, un dispositif de mesure de taux de comptage contient N chambres à fission, N étant un nombre entier supérieur ou égal à 1.

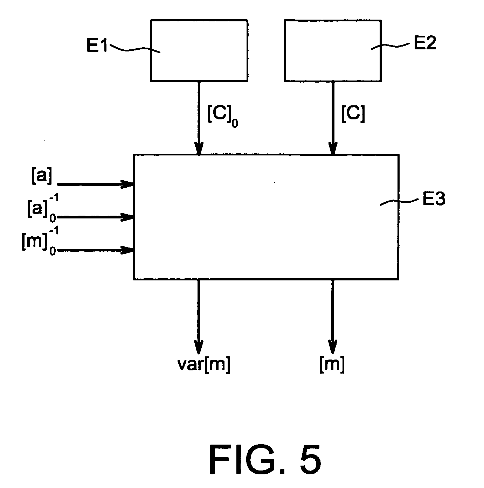

La figure 5 représente un schéma de principe du procédé de détermination de masse efficace de l'invention. Le procédé est décrit le cas général où N masses efficaces de N dépôts fissiles contenus dans N chambres à fission de mesure sont calculées simultanément. Chaque dépôt fissile contient un isotope principal et des impuretés.

Le procédé de l'invention comprend, tout d'abord, deux étapes de mesure E1 et E2. L'étape E1 est une étape de mesure des taux de comptage de N dépôts de matière fissile de masses efficaces connues placés dans N chambres à fission d'étalonnage respectivement identiques aux N chambres à fission de mesure, et l'étape E2 est une étape de mesure des taux de comptage des N dépôts de matière fissile dont les masses efficaces sont à déterminer. Par chambre à fission « identiques », il faut entendre des chambres à fission dont les caractéristiques dimensionnelles externes (diamètre et longueur de la chambre) sont identiques, aux tolérances de fabrication près, les autres caractéristiques n'étant pas nécessairement identiques. L'étape E1 conduit à la formation d'une matrice $[C]_0$ qui est la matrice des taux de comptage mesurés de N dépôts de matière fissile de masses efficaces connues et l'étape E2 conduit à la formation d'une matrice [C] qui est la matrice des taux de comptage mesurés des N dépôts de matière fissile de masses efficaces à déterminer. Les matrices $[C]_0$ et [C] sont formées, par exemple, à partir de mesures de taux de comptage normalisés délivrées par un dispositif conforme au dispositif représenté en figure 4. Lors des étapes E1 et E2, les taux de comptage mesurés sont obtenus dans des conditions de mesure identiques. Par « conditions de mesures identiques », il faut entendre que, dans les deux cas, la chambre à fission occupe une position identique dans la cellule de mesure, que la configuration des mesures est identique (neutrons rapides ou neutrons thermiques) et que la plage de temps dans laquelle les mesures sont effectuées est identique.

Aux étapes E1 et E2 succède une étape E3 de calcul d'une matrice [m] telle que :

$$[m] = [C] \ .I \ ([a] \ x \ ([a]_0^{-1} \times [m]_0^{-1} \times [C]_0 \ )) \ (1),$$

où les symboles « .I » et « x » représentent, respectivement, l'opérateur « division de matrices » et l'opérateur « multiplication de matrices ».

La matrice [m] est une matrice colonne dont les coefficients sont les masses efficaces que l'on cherche à déterminer.

Les matrices [a], $[a]_0^{-1}$ et $[m]_0^{-1}$ sont des matrices connues :

- la matrice [a] est la matrice des analyses isotopiques des N dépôts de matière fissile contenus dans les N chambres à fission, normalisées par rapport aux isotopes principaux,
- la matrice $[a]_0^{-1}$ est la matrice inverse de la matrice $[a]_0$ des analyses isotopiques des N dépôts de matière fissile connus, et
- la matrice $[m]_0^{-1}$ est la matrice inverse de la matrice colonne $[m]_0$ formée à partir des N masses efficaces connues associées aux N dépôts de matière fissile connus.

A l'aide des matrices connues [a], $[a]_0^{-1}$ et $[m]_0^{-1}$ et des matrices [C] et $[C]_0$ construites à partir des mesures mentionnées précédemment, il est alors possible de calculer la matrice [m] (cf. équation (1)).

En plus de la matrice [m], l'étape de calcul E3 calcule également la matrice des variances [var(m)], où var(m) représente la variance de la masse efficace m. L'équation de la matrice des variances est explicitée ci-dessous.

En faisant l'hypothèse de l'indépendance des coefficients des matrices $[a]_0^{-1}$, $[m]_0^{-1}$ et $[C]_0$, la matrice variance de la matrice m s'écrit :

$$var[m] = \left\{ var[C] + [m_{ij}^2] \times \left( var[a] \times [X_{ij}^2] + [a_{ij}^2] \times var[X] \right) \right\} .I \left\{ ([a] \times [X])_{ij}^2 \right\} \ (2),$$

où

- var[C] est la matrice variance de la matrice C,
- var[a] est la matrice variance de la matrice [a],
- var[X] est la matrice variance de la matrice [X] telle que :

$$[\mathrm{X}] = [\mathrm{a}]_0^{-1} \times [\mathrm{m}]_0^{-1} \times [\mathrm{C}]_0 \quad (3),$$

- [$m_{ij}^2$] est la matrice constituée des termes $m_{ij}$ à la puissance 2, les $m_{ij}$ étant les termes de la matrice [m], i étant l'indice relatif aux lignes de la matrice et j étant l'indice relatif aux colonnes de la matrice,

- $\left[a_{ij}^2\right]$ est la matrice constituée des termes $a_{ij}$ à la puissance 2, les $a_{ij}$ étant les termes de la matrice [a], i étant l'indice relatif aux lignes de la matrice et j étant l'indice relatif aux colonnes de la matrice,

- $\left[X_{ij}^2\right]$ est la matrice constituée des termes $X_{ij}$ à la puissance 2, les $X_{ij}$ étant les termes de la matrice [X], i étant l'indice relatif aux lignes de la matrice et j étant l'indice relatif aux colonnes de la matrice,

- $\left[\left([a] \times [X]\right)_{ij}^2\right]$ est la matrice constituée des termes $([a]x[X])_{ij}$ à la puissance 2, les $([a]x[X])_{ij}$ étant les termes de la matrice produit [a]x[X], i étant l'indice relatif aux lignes de la matrice et j étant l'indice relatif aux colonnes de la matrice.

De façon générale, une chambre à fission d'isotope principal i contient des impuretés. Dans la pratique, les impuretés en U-234 et U-236 sont souvent présentes en quantité négligeable dans les chambres Uranium U-233, U-235 ou U-238 et ne posent donc pas de problème. Dans le cas des chambres Pu-238 par exemple, l'impureté U-234 est un produit de la décroissance radioactive du Pu-238 avec une période de 87,7 ans. Si l'on possède une chambre Pu-238 suffisamment récente, la quantité d'U-234 sera donc négligeable.

Dans les cas où il n'est pas possible de négliger les impuretés, le procédé de l'invention prend avantageusement en compte leur influence. Les coefficients calculés de la matrice [m] sont alors des masses efficaces équivalentes qui prennent en compte, outre les masses efficaces des isotopes principaux, les masses efficaces des impuretés présentes dans la chambre à fission. A titre d'exemple non limitatif, l'expression d'une masse efficace équivalente d'isotope principal Pu-238 qui contient des impuretés U-234 va maintenant être donné.

Le nombre équivalent $N_{eq}$ de noyaux d'isotope Pu-238 contenus dans une chambre à fission se calcule avec l'équation suivante :

$$N_{eq} = \left(N_4 \times \frac{\sigma_{4,c}}{\sigma_{8,c}} + N_8\right)$$

où :

- $N_4$ est le nombre de noyaux d'U-234 contenus dans la chambre et connus par analyse,
- $N_8$ est le nombre de noyaux de Pu-238 contenus dans la chambre et connus par analyse,
- $\sigma_{4,c}$ est la section efficace microscopique de fission de l'impureté U-234, calculée, par exemple, avec le code MCNP4C2, dans les conditions de mesure (intervalle de temps de comptage et spectre neutronique rapide ou thermique étudié),
- $\sigma_{8,c}$ = section efficace microscopique de fission du Pu-238, calculée, par exemple, avec le code MCNP4C2, dans les conditions de mesure (intervalle de temps de comptage et nature rapide ou thermique du spectre neutronique étudié).

La masse efficace équivalente $m_{eq}$ de Pu-238 qui est prise en compte comme coefficient de la matrice [m] est alors donnée par la formule suivante :

$$m_{eq} = m_4 \times \frac{238}{234} \times \frac{\sigma_{m4c}}{\sigma_{m8c}} + m_8$$

où

- $m_4$ est la masse efficace de l'U-234 dans la chambre,
- 238 est le nombre de masse du Pu-238,
- 234 est le nombre de masse de l'U-234,
- $\sigma_{m4c}$ est la section efficace microscopique massique de fission de l'U-234, calculée, par exemple, avec le code MCNP4C2, dans les conditions de mesure (intervalle de temps de comptage et nature rapide ou thermique du spectre neutronique étudié),
- $\sigma_{m8c}$ est la section efficace microscopique massique de fission du Pu-238, calculée, par exemple, avec le code MCNP4C2, dans les conditions de mesure (intervalle de temps de comptage et nature rapide ou thermique du spectre neutronique étudié),
- $m_8$ est la masse efficace de Pu-238 dans la chambre.

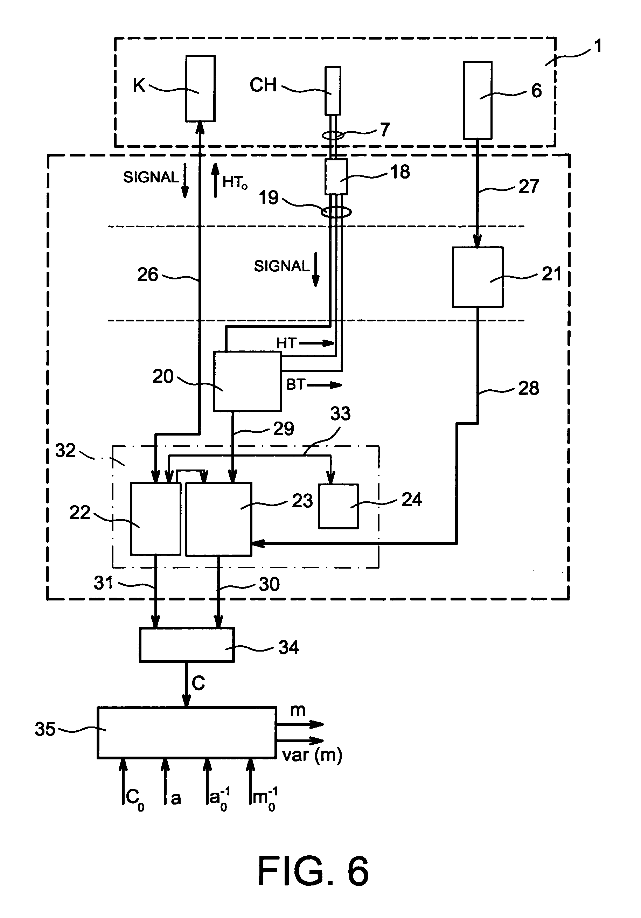

La figure 6 représente un schéma de principe de dispositif d'étalonnage de chambre à fission qui utilise le procédé de l'invention. En plus des éléments mentionnés en relation avec la figure 4, le dispositif d'étalonnage comprend un circuit de calcul 35. Le circuit de calcul 35, par exemple un ordinateur, met en oeuvre le procédé de calcul de l'invention décrit en référence à la figure 5.

La masse efficace m et la variance associée var(m) sont calculées à partir du taux de comptage mesuré C (matrice [C] dans le cas général), du taux de comptage mesuré $C_0$ (matrice $[C]_0$ dans le cas général) et des données connues a, $a_0^{-1}$ et $m_0^{-1}$ (respectivement matrices [a], $[a]_0^{-1}$ et $[m]_0^{-1}$ dans le cas général).

A titre d'illustration et de validation du procédé de l'invention, sont donnés ci-après les résultats d'étalonnage obtenus avec des chambres à fission d'isotope principaux : Th-232, U-235, U-238, Np-237, Pu-239, Pu-240, Pu-241, Pu-242 et Am-241. Ces résultats sont obtenus dans les deux configurations (thermique et rapide) du dispositif d'étalonnage de l'invention par interrogation neutronique active. Ils sont validés par rapport à des étalonnages réalisés en réacteur. Les résultats obtenus en configurations thermique et rapide sont également comparés et validés entre eux. Les résultats sont présentés à l'aide des tableaux 1-11 situés en fin de description.

Obtention des données de référence

Le tableau 1 synthétise l'ensemble des compositions isotopiques des chambres à fission étudiées. Les pourcentages isotopiques sont normalisés à celui de l'isotope principal.

Le coefficient de variation (i.e. l'incertitude relative) sur le pourcentage isotopique est obtenu par retour d'expérience sur les analyses isotopiques, et dépend donc du laboratoire et des moyens d'analyse. A titre d'information, la corrélation utilisée pour déterminer le coefficient de variation y en % en fonction du pourcentage isotopique x, est :

$$y = 0.002406\, x^{-0.609}$$

Les masses efficaces connues des isotopes principaux sont obtenues, par exemple, par étalonnage en réacteur (voir tableau 2), ce qui permet de déterminer le nombre de noyaux représenté par la matrice [n] telle que :

$$[n] = [m] \times [a].$$

Résultats de l'étalonnage primaire

Dans la configuration rapide du dispositif d'étalonnage, les taux de comptage obtenus à partir des chambres étalons primaires sont répertoriés dans le tableau 3. Ils sont normalisés au taux de comptage du moniteur Helium3.

A noter que les chambres $U_{nat}$ n°3 et Pu-239 n°6 n'ont pas été prises en compte dans les étalons primaires. Elles seront utilisées plus loin pour vérifier la validité des résultats obtenus par rapport à leur masse étalonnée en réacteur.

Compte tenu des données ci-dessus, il est aisé de résoudre l'équation (3), d'où le résultat du tableau 4, exprimé par rapport à une unité de masse choisie égale à 1 $\mu$g.

On constate que l'incertitude relative sur les sections efficaces macroscopiques massiques de tous les isotopes est excellente de l'ordre de 1% à 4%, dont moins de 1% provenant de la reproductibilité de la mesure, et environ 2% à 3% provenant des incertitudes sur les masses des étalons primaires.

Dans la configuration thermique du dispositif d'étalonnage, les taux de comptage obtenus à partir des chambres étalons primaires, sont répertoriés dans le tableau 5. Ils sont normalisés au taux de comptage du moniteur Helium3.

Compte tenu des données ci-dessus, il est aisé de résoudre l'équation (3), d'où les résultats du tableau 6 exprimés par rapport à une unité de masse choisie égale à 1 µg.

On constate que l'incertitude relative sur les sections efficaces macroscopiques massiques des isotopes fissiles aux neutrons thermiques est excellente de l'ordre de 2% à 3%, dont moins de 1% provenant de la reproductibilité de la mesure, et environ 2% à 3% provenant des incertitudes sur les masses des étalons primaires.

Par contre, l'incertitude liée aux sections efficaces macroscopiques massiques des isotopes non fissiles aux neutrons thermiques est élevée (~10% pour Pu-242, ~20% pour Pu-240), du fait que les sections de ces isotopes sont très faibles, de l'ordre de 100 fois plus faibles que celles du Pu-239, du Pu-241 et de l'U-235. On note d'ailleurs qu'une section efficace nulle est trouvée mathématiquement pour l'U-238.

A titre indicatif, l'ensemble de ces éléments prouve bien que le spectre neutronique d'interrogation des chambres à fission dans la configuration thermique du dispositif d'étalonnage, est purement thermique.

Étalonnage secondaire en masse efficace des chambres à fission

Le tableau 7 donne la liste des chambres à fission étalonnées en masse efficace dans le dispositif d'étalonnage en configuration rapide, ainsi que les comptages et incertitudes associées.

Le tableau 8 donne la liste des chambres à fission étalonnées en masse efficace dans la configuration thermique du dispositif d'étalonnage, ainsi que les comptages et incertitudes associées.

Résultats des étalonnages en configuration rapide

La matrice des compositions isotopiques et de leurs incertitudes associées étant connue à partir du tableau 1, on obtient les masses efficaces par l'intermédiaire de l'équation (1) (voir tableau 9).

On constate que les incertitudes sur les masses efficaces étalonnées sont de l'ordre de 2% à 3% pour les actinides étudiés (5% dans le cas de l'Am-241), et sont donc comparables à celles obtenues par étalonnages en réacteur.

Pour les 6 chambres étalonnées à la fois dans le dispositif en configuration rapide (« Dispo ») et en réacteur (« Réacteur »), on constate un écart $\dfrac{Dispo - Réacteur}{Réacteur}$ inférieur à l'incertitude expérimentale (CV (%)). On peut donc conclure que les résultats sont cohérents, ce qui valide les mesures réalisées dans le dispositif d'étalonnage en configuration rapide.

Résultats des étalonnages en configuration thermique

La matrice des compositions isotopiques et de leurs incertitudes associées étant connue à partir du tableau 1, on obtient les masses efficaces par l'intermédiaire de l'équation (1) (voir tableau 10).

On constate que les incertitudes sur les masses efficaces étalonnées sont de l'ordre de 2% à 3% dans le cas des isotopes fissiles aux neutrons thermiques (U-235, Pu-239), et sont donc comparables à celles obtenues par étalonnages en réacteur.

Dans le cas des isotopes non fissiles aux neutrons thermiques (Pu-240 et U-238 dans le cas présent), des incertitudes plus élevées (comprises entre 5% et 80% selon la quantité d'impuretés fissiles contenue dans ces dépôts à isotopes principaux non fissiles aux neutrons thermiques) sont observées. Ces incertitudes sont nettement plus élevées que celles observées lors des étalonnages en configuration rapide du dispositif d'étalonnage par interrogation neutronique active, ou en réacteur.

En termes de qualité, il convient donc de noter que les étalonnages en configuration thermique ne permettent d'obtenir des performances correctes en termes de précision que pour les isotopes fissiles aux neutrons thermiques.

Néanmoins, pour les 6 chambres étalonnées à la fois dans le dispositif en configuration thermique (« Dispo ») et en réacteur (« Réacteur »), on constate un écart $\dfrac{Dispo - Réacteur}{Réacteur}$ inférieur à l'incertitude expérimentale (CV (%)). On peut donc conclure que les résultats sont cohérents, ce qui valide les mesures réalisées dans le dispositif d'étalonnage en configuration thermique.

Comparaison des étalonnages en configuration rapide et thermique

Le tableau 11 établit la comparaison entre les résultats obtenus par le dispositif d'étalonnage dans les configurations thermique et rapide.

On constate un excellent accord entre les résultats, l'écart étant toujours nettement inférieur à l'incertitude expérimentale à 1 écart-type.

| Groupe | Isotope Principal | chambre n° | Th232 | U235 | U238 | Np237 | Pu239 | Pu240 | Pu241 | Pu242 | Am241 |
|---|---|---|---|---|---|---|---|---|---|---|---|
| étalons primaires | Th232 | 1 | 100.00% | 0.00% | 0.00% | 0.00% | 0.00% | 0.00% | 0.00% | 0.00% | 0.00% |
| étalons primaires | U235 | 2 | 0.00% | 100.00% | 1.03% | 0.00% | 0.00% | 0.00% | 0.00% | 0.00% | 0.00% |
| étalons primaires | Unat | 3 | 0.00% | 0.73% | 100.00% | 0.00% | 0.00% | 0.00% | 0.00% | 0.00% | 0.00% |
| étalons primaires | Unat | 4 | 0.00% | 0.73% | 100.00% | 0.00% | 0.00% | 0.00% | 0.00% | 0.00% | 0.00% |
| étalons primaires | Np237 | 5 | 0.00% | 0.00% | 0.00% | 100.00% | 0.00% | 0.00% | 0.00% | 0.00% | 0.00% |
| étalons primaires | Pu239 | 6 | 0.00% | 0.00% | 0.00% | 0.00% | 100.00% | 0.88% | 0.00% | 0.01% | 0.00% |
| étalons primaires | Pu239 | 7 | 0.00% | 0.00% | 0.00% | 0.00% | 100.00% | 1.42% | 0.01% | 0.00% | 0.05% |
| étalons primaires | Pu240 | 8 | 0.00% | 0.00% | 0.00% | 0.00% | 0.79% | 100.00% | 0.14% | 0.17% | 0.56% |
| étalons primaires | Pu241 | 9 | 0.00% | 0.00% | 0.00% | 0.00% | 1.91% | 8.54% | 100.00% | 6.85% | 146.58% |
| étalons primaires | Pu242 | 10 | 0.00% | 0.00% | 0.00% | 0.00% | 1.04% | 3.14% | 0.34% | 100.00% | 0.34% |
| étalons primaires | Am241 | 11 | 0.00% | 0.00% | 0.00% | 2.76% | 2.10% | 0.00% | 0.00% | 0.00% | 100.00% |
| chambres à étalonner | U235 | 12 | 0.00% | 100.00% | 1.03% | 0.00% | 0.00% | 0.00% | 0.00% | 0.00% | 0.00% |
| chambres à étalonner | U235 | 13 | 0.00% | 100.00% | 6.35% | 0.00% | 0.00% | 0.00% | 0.00% | 0.00% | 0.00% |
| chambres à étalonner | U235 | 14 | 0.00% | 100.00% | 1.43% | 0.00% | 0.00% | 0.00% | 0.00% | 0.00% | 0.00% |
| chambres à étalonner | U235 | 15 | 0.00% | 100.00% | 1.43% | 0.00% | 0.00% | 0.00% | 0.00% | 0.00% | 0.00% |
| chambres à étalonner | U-238 | 16 | 0.00% | 0.04% | 100.00% | 0.00% | 0.00% | 0.00% | 0.00% | 0.00% | 0.00% |
| chambres à étalonner | U-238 | 17 | 0.00% | 0.24% | 100.00% | 0.00% | 0.00% | 0.00% | 0.00% | 0.00% | 0.00% |
| chambres à étalonner | Np237 | 18 | 0.00% | 0.00% | 0.00% | 100.00% | 0.00% | 0.00% | 0.00% | 0.00% | 0.00% |
| chambres à étalonner | Np237 | 19 | 0.00% | 0.00% | 0.00% | 100.00% | 0.00% | 0.00% | 0.00% | 0.00% | 0.00% |
| chambres à étalonner | Pu239 | 20 | 0.00% | 0.00% | 0.00% | 0.00% | 100.00% | 1.42% | 0.01% | 0.01% | 0.05% |
| chambres à étalonner | Pu239 | 21 | 0.00% | 0.00% | 0.00% | 0.00% | 100.00% | 0.89% | 0.00% | 0.01% | 0.00% |
| chambres à étalonner | Pu239 | 22 | 0.00% | 0.00% | 0.00% | 0.00% | 100.00% | 0.89% | 0.00% | 0.01% | 0.00% |
| chambres à étalonner | Pu240 | 23 | 0.00% | 0.00% | 0.00% | 0.00% | 0.79% | 100.00% | 0.14% | 0.17% | 0.56% |
| chambres à étalonner | Pu240 | 24 | 0.00% | 0.00% | 0.00% | 0.00% | 0.79% | 100.00% | 0.14% | 0.17% | 0.56% |
| chambres à étalonner | Am241 | 25 | 0.00% | 0.00% | 0.00% | 2.70% | 0.21% | 0.06% | 0.00% | 0.00% | 100.00% |

Tableau 1 : composition isotopique des chambres à fission, en % de l'isotope principal

Tableau 2 : masses des chambres étalons primaires

| isotope principal | chambre n˚ | Masse d'isotope principal ($\mu$g) |
|---|---|---|
| Th232 | 1 | 1009.51 |
| U235 | 2 | 226.22 |
| $U_{nat}$ | 3 | 545.05 |
| $U_{nat}$ | 4 | 401.77 |
| Np237 | 5 | 367.73 |
| Pu239 | 6 | 161.73 |
| Pu239 | 7 | 32.95 |
| Pu240 | 8 | 291.46 |
| Pu241 | 9 | 71.30 |
| Pu242 | 10 | 85.19 |
| Am241 | 11 | 26.58 |

Tableau 3 : comptages et incertitudes associées des chambres étalons primaires, dans la configuration rapide du dispositif d'étalonnage

| isotope principal | chambre n˚ | intégrale/moniteur | CV (%) |
|---|---|---|---|
| Th232 | 1 | 0.00095962 | 0.96% |
| U235 | 2 | 0.012085661 | 0.80% |
| $U_{nat}$ | 4 | 0.001530497 | 0.97% |
| Np237 | 5 | 0.003152641 | 0.92% |
| Pu239 | 7 | 0.001975405 | 0.95% |
| Pu240 | 8 | 0.002678112 | 0.95% |
| Pu241 | 9 | 0.002282691 | 0.95% |
| Pu242 | 10 | 0.000742626 | 1.15% |
| Am241 | 11 | 0.000298685 | 2.83% |

Tableau 4 : vecteur colonne [X] des sections efficaces intégrales massiques (unité de masse égale à 1 $\mu$g) de fission macroscopiques normalisées au moniteur, dans la configuration rapide du dispositif d'étalonnage

|  | X | incertitude sur X | CV (%) sur X |
|---|---|---|---|
| Th232 | 9.51E-07 | 2.73275E-08 | 2.87% |
| U235 | 5.34E-05 | 1.2567E-06 | 2.35% |
| U238 | 3.42E-06 | 1.19067E-07 | 3.48% |
| Np237 | 8.57E-06 | 2.4552E-07 | 2.86% |
| Pu239 | 5.98E-05 | 1.44212E-06 | 2.41% |
| Pu240 | 8.63E-06 | 3.43628E-07 | 3.98% |
| Pu241 | 1.53E-05 | 1.1934E-07 | 0.78% |
| Pu242 | 7.74E-06 | 3.19593E-07 | 4.13% |
| Am241 | 9.74E-06 | 4.92311E-07 | 5.05% |

Tableau 5 : comptages et incertitudes associées des chambres étalons primaires, dans la configuration thermique du dispositif d'étalonnage

| isotope principal | chambre n° | intégrale/moniteur | CV (%) |
|---|---|---|---|
| U235 | 2 | 1.4262E-02 | 0.42% |
| Unat | 4 | 1.8436E-04 | 1.01% |
| Pu239 | 7 | 2.7746E-03 | 0.75% |
| Pu240 | 8 | 2.5193E-04 | 0.97% |
| Pu241 | 9 | 2.0253E-03 | 0.61% |
| Pu242 | 10 | 1.1311E-04 | 1.29% |
| Am241 | 11 | 8.0131E-05 | 1.62% |

Tableau 6 : vecteur colonne [X] des sections efficaces intégrales massiques (unité de masse égale à 1 μg) de fission macroscopiques normalisées au moniteur, dans la configuration thermique du dispositif d'étalonnage

| | X | CV (%) sur X |
|---|---|---|
| U235 | 6.3032E-05 | 2.31% |
| U238 | 0 | - |
| Pu239 | 8.4161E-05 | 2.39% |
| Pu240 | 1.5047E-07 | 21.41% |
| Pu241 | 2.4924E-05 | 3.11% |
| Pu242 | 3.7305E-07 | 10.78% |
| Am241 | 1.2487E-06 | 6.38% |

Tableau 7 : comptages et incertitudes associées des chambres à étalonner, dans la configuration rapide du dispositif d'étalonnage

| isotope principal | chambre n° | intégrale/moniteur | CV (%) |
|---|---|---|---|
| U235 | 12 | 0.007796668 | 0.74% |
| U235 | 13 | 0.006272435 | 0.89% |
| U235 | 15 | 0.001103372 | 1.35% |
| U$_{nat}$ | 3 | 0.001985892 | 0.97% |
| U-238 | 16 | 0.010785962 | 0.72% |
| U-238 | 17 | 0.008568659 | 0.94% |
| Np237 | 18 | 0.00241772 | 0.92% |
| Np237 | 19 | 0.000783753 | 1.11% |
| Pu239 | 20 | 0.001872543 | 0.98% |
| Pu239 | 6 | 0.009859599 | 0.89% |
| Pu239 | 21 | 0.001739992 | 1.02% |
| Pu239 | 22 | 0.005682472 | 0.98% |
| Pu240 | 23 | 0.001289246 | 0.98% |
| Pu240 | 24 | 0.00129188 | 0.97% |

(suite)

| isotope principal | chambre n° | intégrale/moniteur | CV (%) |
|---|---|---|---|
| Am241 | 25 | 0.000424661 | 2.12% |

Tableau 8 : comptages et incertitudes associées des chambres à étalonner, dans la configuration thermique du dispositif d'étalonnage.

| isotope principal | chambre n° | intégrale/moniteur | CV (%) |
|---|---|---|---|
| U235 | 12 | 9.2204E-03 | 0.52% |
| U235 | 14 | 8.7994E-02 | 0.18% |
| U235 | 15 | 1.2893E-03 | 0.85% |
| $U_{nat}$ | 5 | 2.4655E-04 | 0.87% |
| U-238 | 16 | 8.2559E-05 | 1.14% |
| U-238 | 17 | 3.7104E-04 | 0.92% |
| Pu239 | 20 | 2.5886E-03 | 0.85% |
| Pu239 | 6 | 1.3617E-02 | 0.43% |
| Pu239 | 21 | 2.3803E-03 | 0.63% |
| Pu239 | 22 | 8.0689E-03 | 0.48% |
| Pu240 | 23 | 1.1742E-04 | 1.03% |
| Pu240 | 24 | 1.1558E-04 | 1.04% |

Tableau 9 : masses efficaces des chambres à fission dans la configuration rapide

| isotope | chambre n° | Masse efficace en dispo. ($\mu$g) | CV (%) | masse étalonnée en réacteur ($\mu$g) | CV (%) | $\dfrac{Dispo - Réacteur}{Réacteur}$ | CV (%) |
|---|---|---|---|---|---|---|---|
| U235 | 12 | 145.94 | 2.48% | 140.96 | 2.53% | 3.53% | 3.54% |
| U235 | 13 | 117.01 | 2.52% | / | / | / | / |
| U235 | 15 | 20.65 | 2.72% | / | / | / | / |
| $U_{nat}$ | 3 | 521.32 | 3.32% | 545.05 | 2.60% | -4.35% | 4.22% |
| U-238 | 16 | 3134.19 | 3.55% | / | / | / | / |
| Np237 | 18 | 282.01 | 3.02% | / | / | / | / |
| Np237 | 19 | 91.42 | 3.08% | / | / | / | / |
| Pu239 | 20 | 31.23 | 2.61% | 30.47 | 2.47% | 2.51% | 3.60% |
| Pu239 | 6 | 164.61 | 2.58% | 161.73 | 2.20% | 1.78% | 3.39% |
| Pu239 | 21 | 29.05 | 2.62% | / | / | / | / |
| Pu239 | 22 | 94.87 | 2.61% | / | / | / | / |
| Pu240 | 23 | 140.30 | 3.88% | 137.01 | 3.78% | 2.40% | 5.42% |
| Pu240 | 24 | 140.60 | 3.88% | 133.33 | 3.78% | 5.45% | 5.42% |
| Am241 | 25 | 42.03 | 5.32% | / | / | / | / |

Tableau 10 : masses efficaces des chambres à fission dans la configuration thermique

| isotope | chambre n° | Masse efficace en dispo. (μg) | CV (%) | masse étalonnée en réacteur (μg) | CV (%) | $\dfrac{Dispo - Réacteur}{Réacteur}$ | CV (%) |
|---|---|---|---|---|---|---|---|
| U235 | 14 | 1396.25 | 2.33% | / | / | / | / |
| U235 | 12 | 146.30 | 2.38% | 140.96 | 2.53% | 3.79% | 3.47% |
| U235 | 15 | 20.46 | 2.45% | / | / | / | / |
| U-238 | 16 | 2772.07 | 78.01% | / | / | / | / |
| Unat | 3 | 537.47 | 7.36% | 545.05 | 2.60% | -1.39% | 7.80% |
| Pu239 | 6 | 161.78 | 2.44% | 161.73 | 2.20% | 0.03% | 3.29% |
| Pu239 | 20 | 30.74 | 2.54% | 30.47 | 2.47% | 0.89% | 3.54% |
| Pu239 | 21 | 28.27 | 2.46% | / | / | / | / |
| Pu239 | 22 | 95.86 | 2.45% | / | / | / | / |
| Pu240 | 24 | 133.74 | 6.42% | 133.33 | 3.78% | 0.31% | 7.45% |
| Pu240 | 23 | 135.90 | 5.22% | 137.01 | 3.78% | -0.81% | 6.45% |

Tableau 11 : comparaison des masses efficaces obtenues en configurations thermique et rapide

| isotope | chambre n° | Masse efficace (μg) en config. thermique | CV (%) | Masse efficace (μg) en rapide | CV (%) | $\dfrac{thermique - rapide}{rapide}$ | CV (%) |
|---|---|---|---|---|---|---|---|
| U235 | 12 | 146.30 | 2.38% | 145.94 | 2.48% | 0.25% | 3.44% |
| U235 | 15 | 20.46 | 2.45% | 20.65 | 2.72% | -0.92% | 3.66% |
| U-238 | 16 | 2772.07 | 78.01% | 3134.19 | 3.55% | -11.55% | 78.09% |
| Unat | 3 | 537.47 | 7.36% | 521.32 | 3.32% | 3.10% | 8.07% |
| Pu239 | 6 | 161.78 | 2.44% | 164.61 | 2.58% | -1.72% | 3.55% |
| Pu239 | 20 | 30.74 | 2.54% | 31.23 | 2.61% | -1.57% | 3.64% |
| Pu239 | 21 | 28.27 | 2.46% | 29.05 | 2.62% | -2.69% | 3.59% |
| Pu239 | 22 | 95.86 | 2.45% | 94.87 | 2.61% | 1.04% | 3.58% |
| Pu240 | 23 | 133.74 | 6.42% | 140.30 | 3.88% | -4.68% | 7.50% |
| Pu240 | 24 | 135.90 | 5.22% | 140.60 | 3.88% | -3.34% | 6.50% |

**Revendications**

1. Procédé de détermination de masses efficaces de N dépôts de matière fissile placés, respectivement, dans N chambres à fission de mesure, N étant un nombre entier supérieur ou égal à 1, **caractérisé en ce qu'**il comprend :

A) une première étape de mesure (E1) durant laquelle est mesuré le taux de comptage de N chambres à fission d'étalonnage respectivement identiques, quant à leurs dimensions extérieures, aux N chambres à fission de mesure, les N chambres à fission d'étalonnage contenant respectivement N dépôts de matière fissile de masses efficaces connues, la mesure du taux de comptage des N chambres à fission d'étalonnage constituant une matrice $[C]_0$ de taux de comptage des N chambres à fission d'étalonnage,

B) une deuxième étape de mesure (E2) durant laquelle est mesuré le taux de comptage des N chambres à fission de mesure contenant les N dépôts respectifs de matière fissile, pour constituer une matrice [C] de taux de comptage des N chambres à fission de mesure, la deuxième étape de mesure étant effectuée dans des conditions de mesure identiques aux conditions de mesure dans lesquelles la première étape de mesure est effectuée, et

C) une étape de calcul (E3) d'une matrice colonne [m] telle que :

$$[m] \ = \ [C] \ .I( \ [a] \ x \ ([a]_0^{-1} \ x \ [m]_0^{-1} \ x \ [C]_0)),$$

les coefficients de la matrice [m] étant les masses efficaces à déterminer, les symboles « .I » et « x » étant, respectivement, l'opérateur « division de matrices » et l'opérateur « produit de matrices » et les matrices [a], [a]_0^{-1} et [m]_0^{-1} étant respectivement :

- la matrice [a], une matrice connue des analyses isotopiques associée aux N dépôts de matière fissile de masses efficaces à déterminer,
- la matrice $[a]_0^{-1}$, une matrice inverse d'une matrice $[a]_0$ connue des analyses isotopiques associée aux N dépôts de matière fissile de masses efficaces connues,
- la matrice $[m]_0^{-1}$, une matrice inverse d'une matrice $[m]_0$ connue dont les coefficients sont les masses efficaces connues des N dépôts de matière fissile connus.

2. Procédé selon la revendication 1, dans lequel est calculée une matrice variance de la matrice [m] telle que

$$\text{var}[m] \ = \ \left\{\text{var}[C] \ + \ \left[m_{ij}^2\right] \times \left(\text{var}[a] \times \left[X_{ij}^2\right] \ + \ \left[a_{ij}^2\right] \times \text{var}[X]\right)\right\} .I \left\{\left([a] \times [x]\right)_{ij}^2\right\},$$

où

- var[C] est la matrice variance de la matrice C,
- var[a] est la matrice variance de la matrice [a],
- var[X] est la matrice variance de la matrice [X] telle que :

$$[X] \ = \ [a]_0^{-1} \ \times \ [m]_0^{-1} \ \times \ [C]_0 \ ,$$

- $[m_{ij}^2]$ est la matrice constituée des termes $m_{ij}$ à la puissance 2, les $m_{ij}$ étant les coefficients de la matrice [m], i étant l'indice relatif aux lignes de la matrice et j étant l'indice relatif aux colonnes de la matrice,

- $\left[a_{ij}^2\right]$ est la matrice constituée des termes $a_{ij}$ à la puissance 2, les $a_{ij}$ étant les coefficients de la matrice [a], i étant l'indice relatif aux lignes de la matrice et j étant l'indice relatif aux colonnes de la matrice,

- $\left[X_{ij}^2\right]$ est la matrice constituée des termes $X_{ij}$ à la puissance 2, les $X_{ij}$ étant les coefficients de la matrice [X], i étant l'indice relatif aux lignes de la matrice et j étant l'indice relatif aux colonnes de la matrice,

- $\left[\left([a] \ x \ [X]\right)_{ij}^2\right]$ est la matrice constituée des termes $([a]x[X])_{ij}$ à la puissance 2, les $([a]x[X])_{ij}$ étant les coefficients de la matrice produit [a]x[X], i étant l'indice relatif aux lignes de la matrice et j étant l'indice relatif aux colonnes de la matrice.

**Claims**

1. Method to determine the effective masses of N deposits of fissile matter respectively placed in N measurement fission chambers, N being an integer of 1 or more, **characterized in that** it comprises:

A) a first measuring step (E1) during which the count rate is measured of N calibration fission chambers respectively identical in their outer dimensions to the N measurement fission chambers, the N calibration fission chambers containing respectively N deposits of fissile matter of known effective masses, the measurement of the count rate of the N calibration fission chambers forming a matrix $[C]_0$ of count rates of known deposits of fissile matter,

B) a second measuring step (E2) during which the count rate is measured of the N measurement fission chambers containing the N respective deposits of fissile matter, to form a matrix [C] of count rates of deposits the N measurement fission chambers, the second measuring step being conducted under identical measuring conditions to the measuring conditions under which the first measuring step is conducted, and

C) a computing step (E3) to calculate a column matrix [m] such that:

$$[m] = [C] .I( [a] \times ([a]_0^{-1} \times [m]_0^{-1} \times [C]_0)),$$

the coefficients of matrix [m] being the effective masses to be determined, the symbols ".I" and "x" respectively being the "matrix division" operator and the "matrix product" operator and the matrices [a], $[a]_0^{-1}$ and $[m]_0^{-1}$ respectively being:

- matrix [a], a known matrix of the isotopic analyses associated with the N deposits of fissile matter whose effective masses are to be determined,
- matrix $[a]_0^{-1}$, an inverse matrix of a known matrix $[a]_0$ of the isotopic analyses associated with the N deposits of fissile matter of known effective masses,
- matrix $[m]_0^{-1}$, an inverse matrix of a known matrix $[m]_0$ whose coefficients are the known effective masses of the N known deposits of fissile matter.

2. Method according to claim 1, wherein a variance matrix is calculated of matrix [m] such that:

$$var[m] = \left\{ var[C] + \left[ m_{ij}^2 \right] \times \left( var[a] \times \left[ X_{ij}^2 \right] + \left[ a_{ij}^2 \right] \times var[X] \right) \right\} .I \left\{ \left[ ([a] \times [X])_{ij}^2 \right] \right\},$$

in which:

- var[C] is the variance matrix of matrix C,
- var[a] is the variance matrix of matrix [a],
- var[X] is the variance matrix of matrix [X] such that:

$$[X] = [a]_0^{-1} \times [m]_0^{-1} \times [C]_0,$$

- $[m_{ij}^2]$ is the matrix consisting of the terms $m_{ij}$ to the power of 2, the terms $m_{ij}$ being the coefficients of matrix [m], i being the index relating to the rows of the matrix and j being the index relating to the columns of the matrix,

- $\left[ a_{ij}^2 \right]$ is the matrix consisting of the terms $a_{ij}$ to the power of 2, the terms $a_{ij}$ being the coefficients of matrix [a], i being the index relating to the rows of the matrix and j being the index relating to the columns of the matrix,

- $\left[ X_{ij}^2 \right]$ is the matrix consisting of the terms $X_{ij}$ to the power of 2, the terms $X_{ij}$ being the coefficients of matrix [X], i being the index relating to the rows of the matrix and j being the index relating to the columns of the matrix,

- $\left[ ([a] \times [X])_{ij}^2 \right]$ is the matrix consisting of the terms $([a]x[X])_{ij}$ to the power of 2, the terms $([a]x[X])_{ij}$ being the coefficients of the product matrix [a]x[X], i being the index relating to the rows of the matrix and j being the index relating to the columns of the matrix.

**Patentansprüche**

1. Verfahren zum Bestimmen effektiver bzw. wirksamer Massen von N Ablagen bzw. Depots spaltbarer Materie, die jeweils in N Meß-Spaltungs-bzw. Fissionskammern angeordnet sind, wobei N eine ganze Zahl größer oder gleich 1 ist, das Verfahren **dadurch gekennzeichnet, dass** es umfaßt:

   A) eine erste Meßstufe (E1), in welcher die Zählraten von N Eich-Spaltungs-bzw. Fissionskammern gemessen werden, die jeweils hinsichtlich ihrer äußeren Abmessungen gleichartig mit den N Meß-Spaltungs-bzw. Fissionskammern sind und jeweils N Ablagen bzw. Depots spaltbarer Materie bekannter effektiver bzw. wirksamer Massen enthalten, wobei die Messung der Zählrate der N Eich- Spaltungs-bzw. -Fissionskammern eine Matrix $[C]_0$ von Zählraten der N Eich-Spaltungs-bzw. Fissionskammern bildet,
   B) eine zweite Meßstufe (E2), in welcher die Zählraten der N Meß-Spaltungs-bzw. Fissionskammern, die jeweils die N Ablagen bzw. Depots spaltbarer Materie enthalten, gemessen werden zur Bildung einer Matrix $[C]$ von Zählraten der N Meß-Spaltungs-bzw. Fissionskammern, wobei die zweite Meßstufe unter denselben Meßbedingungen ausgeführt wird wie die Meßbedingungen, unter denen die erste Meßstufe erfolgte, sowie
   C) eine Rechenstufe (E3) zur Berechnung einer Matrixspalte $[m]$ der Art:

$$[m] = [C] \,.\vert\, (\, [a] \times ([a]_0^{-1} \times [m]_0^{-1} \times [C]_0)\, ),$$

   wobei die Koeffizienten der Matrix $[m]$ die zu bestimmenden effektiven bzw.wirksamen Massen sind, die Symbole << .I >> und << x >> der Operator <<Matrizendivision>> bzw. der Operator << Matrizenprodukt >> sind und die Matrizen $[a]$, $[a]_0^{-1}$, und $[m]_0^{-1}$ das folgende bedeuten:

   - die Matrix $\{a\}$ ist eine bekannte Matrix der Isotopen-Analysen, die den N Ablagen bzw. Depots spaltbarer Materie mit zu bestimmenden effektiven bzw. wirksamen Massen zugeordnet sind,
   - die Matrix $[a]_0^{-1}$ ist eine inverse Matrix einer bekannten Matrix $[a]_0$ der Isotopen-Analysen, die den N Ablagen bzw. Depots spaltbarer Materie mit bekannten effektiven bzw. wirksamen Massen zugeordnet sind,
   - die Matrix $[m]_0^{-1}$ ist eine inverse Matrix einer bekannten Matrix $[m]_0$, deren Koeffizienten die bekannten effektiven bzw. wirksamen Massen der N bekannten Ablagen bzw. Depots spaltbarer Materie sind.

2. Verfahren nach Anspruch 1, bei welchem eine Varianzmatrix der Matrix $[m]$ berechnet wird derart dass

$$\text{var}[m] \;=\; \{\text{var}[C] \;+\; [m^2_{ij}] \times (\text{var}[a] \times [\,X^2_{ij}\,] + [a^2_{ij}] \times \text{var}[x\,])\} \,.\vert\, \{[([a\,] \times [x])^2_{ij}]\},$$

   mit den Bedeutungen

   - var $[C]$ ist die Varianzmatrix der Matrix C,
   - var $[a]$ ist die Varianzmatrix der Matrix $[a]$,
   - var $[X]$ ist die Varianzmatrix der Matrix $[X]$ z. B.

$$[X] = \; [a]_0^{-1} \times [m]_0^{-1} \times [C]_0,$$

   - $[m^2_{ij}]$ ist die aus den Termen $m_{ij}$ in der zweiten Potenz bestehende Matrix, wobei die $m_{ij}$ die Koeffizienten der Matrix $[m]$ sind und i bzw. j der Zeilen- bzw. der Spaltenindex der Matrix sind,
   - $[a^2_{ij}]$ ist die aus den Termen $a_{ij}$ in der zweiten Potenz bestehende Matrix, wobei die $a_{ij}$ die Koeffizienten der Matrix $[a]$ sind und i bzw. j der Zeilen- bzw. der Spaltenindex der Matrix sind,
   - $[X^2_{ij}]$ ist die aus den Termen $X_{ij}$ in der zweiten Potenz bestehende Matrix, wobei die $X_{ij}$ die Koeffizienten der Matrix X sind und i bzw. j der Zeilen- bzw. der Spaltenindex der Matrix sind,
   - $[([a] \times X)^2_{ij}]$ ist die aus den Termen $([a] \times [X]_{ij}$ in der zweiten Potenz bestehende Matrix, wobei die $([a] \times [X])_{ij}$ die Koeffizienten des Matrixprodukts bzw. der Produktmatrix $[a] \times [X]$ sind und i bzw. j der Zeilen- bzw. der Spaltenkoeffizient der Matrix sind.

# FIG. 1

FIG. 2

FIG. 3

EP 2 225 588 B1

# FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Neutron induced fission cross section of Pu-244. *Nuclear Physics,* 1983, vol. A, 393